# EUROPÄISCHE PATENTSCHRIFT

(11) **EP 3 615 715 B1**
(45) Veröffentlichungstag und Bekanntmachung des Hinweises auf die Patenterteilung: **17.03.2021**
(21) Anmeldenummer: 18717601.1
(22) Anmeldetag: 12.04.2018
(51) Int. Cl.: H01M 4/13, H01M 4/139, H01M 4/62, H01M 4/02, H01M 10/0525, H01M 4/04, H01M 4/38, H01M 4/86, H01M 4/88

(54) **VERFAHREN ZUR HERSTELLUNG EINES ELEKTRODENFILMS UND ELEKTRODE**
METHOD OF MANUFACTURING AN ELECTRODE FILM AND ELECTRODE
MÉTHODE DE FABRICATION D'UN FILM D'ÉLECTRODE ET ÉLECTRODE

(30) Priorität: 26.04.2017 DE 102017206969
(43) Veröffentlichungstag der Anmeldung: 04.03.2020
(73) Patentinhaber: Robert Bosch GmbH, 70442 Stuttgart (DE)
(72) Erfinder: BAUER, Harald, 71139 Ehningen (DE); HACKENBERG, Juergen, 74343 Sachsenheim (DE); GLOCK, Armin, 73660 Urbach (DE)
(86) Internationale Anmeldenummer: PCT/EP2018/059386
(87) Internationale Veröffentlichungsnummer: WO 2018/197227

(56) Entgegenhaltungen:
- WO-A1-2013/082330
- WO-A1-2014/001212
- JP-A- 2002 124 299
- US-A- 5 753 388

## Beschreibung

Die Erfindung betrifft ein Verfahren zur Herstellung eines Elektrodenfilms, wobei zunächst ein zugfestes Elektrodenband bereitgestellt wird, welches ein elektrochemisches Aktivmaterial enthält, wobei das Elektrodenband elektrochemisch prälithiiert wird, und wobei das prälithiierte Elektrodenband in einem Spülbad gespült wird. Die Erfindung betrifft auch eine Elektrode, welche einen nach dem erfindungsgemäßen Verfahren hergestellten Elektrodenfilm umfasst.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Elektrodenfilm aufgebracht ist, welcher ein elektrochemisches Aktivmaterial aufweist. Das Aktivmaterial für die Kathode enthält beispielsweise ein Metalloxid wie Li₂MnO₃ sowie eine NCM-Legierung, also eine Legierung aus Nickel, Cobald und Mangan. Das Aktivmaterial für die Anode enthält beispielsweise Silizium oder Graphit.

In das Aktivmaterial der Anode sind Lithiumatome eingelagert. Beim Betrieb der Batteriezelle, also bei einem Entladevorgang, fließen Elektronen in einem äußeren Stromkreis von der Anode zur Kathode. Innerhalb der Batteriezelle wandern Lithiumionen bei einem Entladevorgang von der Anode zur Kathode. Dabei lagern die Lithiumionen aus dem Aktivmaterial der Anode reversibel aus, was auch als Delithiierung bezeichnet wird. Bei einem Ladevorgang der Batteriezelle wandern die Lithiumionen von der Kathode zu der Anode. Dabei lagern die Lithiumionen wieder in das Aktivmaterial der Anode reversibel ein, was auch als Lithiierung bezeichnet wird.

Um irreversible Verluste an Lithium aus der Anode zu kompensieren kann der Elektrodenfilm der Anode vor dem Zusammenbau der Batteriezelle mit Lithium beladen werden. Ein solcher Vorgang wird als Prälithiierung bezeichnet. Ein Verfahren zur Prälithiierung einer Energiespeichereinheit, insbesondere eines Lithium-Ionen-Kondensators, ist beispielsweise aus der US 2014/0313639 A1 bekannt.

Die WO 96/32754 A1 offenbart ein Verfahren zur Herstellung einer elektrochemischen Zelle, wobei eine Anode und eine Kathode bereitgestellt werden, und wobei ein Elektrolyt zwischen der Anode und der Kathode eingebracht wird. In die Anode, welche Graphit enthält, wird mittels Prälithiierung Lithium eingebracht.

Aus der WO 2013/082330 A1 ist ein Verfahren zur Prälithiierung einer Anode bekannt, wobei Lithium in einem elektrochemischen Prozess in die Anode eingebracht wird. Die Anode wird durch ein Bad geführt, welches ein in einem nichtwässrigen Lösemittel gelöstes Lithiumsalz enthält. Nach Anlegen einer Spannung zwischen der Anode und einer Badelektrode werden Lithiumionen in die Anode eingelagert.

Ein Verfahren zur Herstellung einer Sekundärbatterie mit einem nichtwässrigen Polymerelektrolyt ist in der JP 2002-124299 A offenbart. Dabei wird eine Elektrodenbahn, welche einen beidseitig beschichteten Stromableiter aufweist, zum Imprägnieren durch ein Bad geführt, in welchem eine perforierte Trommel angeordnet ist.

### Offenbarung der Erfindung

Es wird ein Verfahren zur Herstellung eines Elektrodenfilms vorgeschlagen, wobei zunächst ein zugfestes Elektrodenband bereitgestellt wird, welches ein elektrochemisches Aktivmaterial enthält, und wobei das Elektrodenband elektrochemisch prälithiiert wird, und wobei das prälithiierte Elektrodenband anschließend in einem Spülbad gespült wird, um überschüssigen Elektrolyt aus dem Elektrodenband zu entfernen.

Erfindungsgemäß wird das prälithiierte Elektrodenband derart in das Spülbad eingebracht, dass mindestens eine erste Oberfläche des Elektrodenbandes in Kontakt mit einer in dem Spülbad befindlichen Spülflüssigkeit gelangt. In dem Spülbad wird eine Druckdifferenz derart erzeugt, dass ein erster Druck, welcher an der ersten Oberfläche des Elektrodenbandes herrscht, größer ist als ein zweiter Druck, welcher an mindestens einem Teil einer der ersten Oberfläche gegenüber liegenden zweiten Oberfläche des Elektrodenbandes herrscht. Durch die so erzeugte Druckdifferenz strömt die Spülflüssigkeit durch das Elektrodenband hindurch. Dabei wäscht die Spülflüssigkeit den in dem Elektrodenband vorhandenen Elektrolyt aus, welcher daraufhin aus dem Elektrodenband austritt. Aus dem Elektrodenband entsteht nach Abgabe des vorhandenen Elektrolyten der Elektrodenfilm.

Vorzugsweise ist das prälithiierte Elektrodenband beim Einbringen in das Spülbad porös. Somit ist ein Durchfluss der Spülflüssigkeit durch das das Elektrodenband möglich.

Vorteilhaft ist das prälithiierte Elektrodenband beim Einbringen in das Spülbad auch frei von einem metallischen Stromableiter. Ein massiver metallischer Stromableiter würde den Durchfluss der Spülflüssigkeit behindern. Die Verwendung eines perforierten Metallbandes als Stromableiter in der Form von Streckmetallbändern oder gelochten Bändern ist möglich, jedoch wird die Spülqualität durch die Änderung der Porosität beim Übergang von dem Elektrodenband auf die Metallbandlochung reduziert. Vorteilhaft wird der Stromableiter daher erst auf den Elektrodenfilm nach Entnahme aus dem Spülbad aufgebracht.

Gemäß einer vorteilhaften Ausgestaltung der Erfindung weist das Spülbad ein perforiertes Element auf und das prälithiierte Elektrodenband wird derart in das Spülbad eingebracht, dass die zweite Oberfläche des Elektrodenbandes an dem perforierten Element anliegt. Auf diese Art kann die mechanische Belastung auf das Elektrodenband, die durch die Druckdifferenz verursacht wird, verringert werden.

Bevorzugt ist das perforierte Element dabei hohlzylindrisch, insbesondere in Form einer Trommel oder Walze, ausgebildet. Dabei weist das perforierte Element durchgehende Öffnungen oder Durchbrüche auf, welche eine Durchströmung mit der Spülflüssigkeit erlauben.

Das prälithiierte Elektrodenband wird vorteilhaft derart in das Spülbad eingebracht, dass die zweite Oberfläche des Elektrodenbandes eine Mantelfläche des perforierten Elements teilweise umgibt. Das Elektrodenband wird also teilweise um die Mantelfläche des hohlzylindrischen perforierten Elements gewunden.

Gemäß einer vorteilhaften Weiterbildung der Erfindung rotiert das hohlzylindrische perforierte Element in dem Spülbad um eine Mittelachse. Dabei entspricht die Umfangsgeschwindigkeit des hohlzylindrischen perforierten Elements an seiner Mantelfläche einer Vorschubgeschwindigkeit des Elektrodenbandes.

Vorzugsweise wird die Druckdifferenz in dem Spülbad erzeugt, indem innerhalb des perforierten Elements ein Unterdruck erzeugt wird. Damit wird die Spülflüssigkeit durch das Elektrodenband und weiter durch die Mantelfläche des hohlzylindrischen perforierten Elements hindurch in das perforierte Element hinein gesaugt.

Vorteilhaft wird die Spülflüssigkeit dann innerhalb des perforierten Elements abgesaugt und dem Spülbad außerhalb des perforierten Elements wieder zugeführt. Somit kann die Spülflüssigkeit in einem Kreislauf durch das Spülbad fließen. Bevorzugt weist der Kreislauf auch einen Filter auf, in welchem der ausgewaschene Elektrolyt von der Spülflüssigkeit getrennt wird.

Es wird auch eine Elektrode, insbesondere eine Anode für eine Lithium-Ionen-Batteriezelle, vorgeschlagen, welche einen erfindungsgemäß hergestellten Elektrodenfilm und einen Stromableiter umfasst. Der Stromableiter ist bevorzugt metallisch ausgebildet und insbesondere aus Kupfer gefertigt. Der Stromableiter wird dabei erst auf den Elektrodenfilm nach Entnahme aus dem Spülbad aufgebracht.

### Vorteile der Erfindung

Mittels des erfindungsgemäßen Verfahrens ist eine deutlich beschleunigte Spülung des Elektrodenbandes nach der elektrochemischen Prälithiierung zur Entfernung des überschüssigen Elektrolyten aus dem Elektrodenband durchführbar. Dadurch, dass das Elektrodenband porös und frei von einem metallischen Stromableiter ist kann die Spülflüssigkeit durch das Elektrodenband hindurch strömen. Somit ist die Spülung des Elektrodenbandes schneller durchführbar als wenn das Elektrodenbad in der Spülflüssigkeit liegt und der überschüssige Elektrolyt verhältnismäßig langsam durch Diffusion aus dem Elektrodenband heraus in die Spülflüssigkeit gelangt. Wenn sich das Elektrodenband flächig an das perforierte Element anlegt werden mechanische Belastungen auf das Elektrodenband, die durch die Druckdifferenz verursacht werden, verringert. Dadurch werden Beschädigungen des Elektrodenbandes während des Spülens vermieden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Prälithiierung eines Elektrodenbands,
- Figur 2: eine schematische Darstellung einer Spülung des Elektrodenbands aus Figur 1,
- Figur 3: eine vergrößerte Darstellung eines Bereichs aus Figur 2 und
- Figur 4: eine schematische Schnittdarstellung einer Elektrode.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

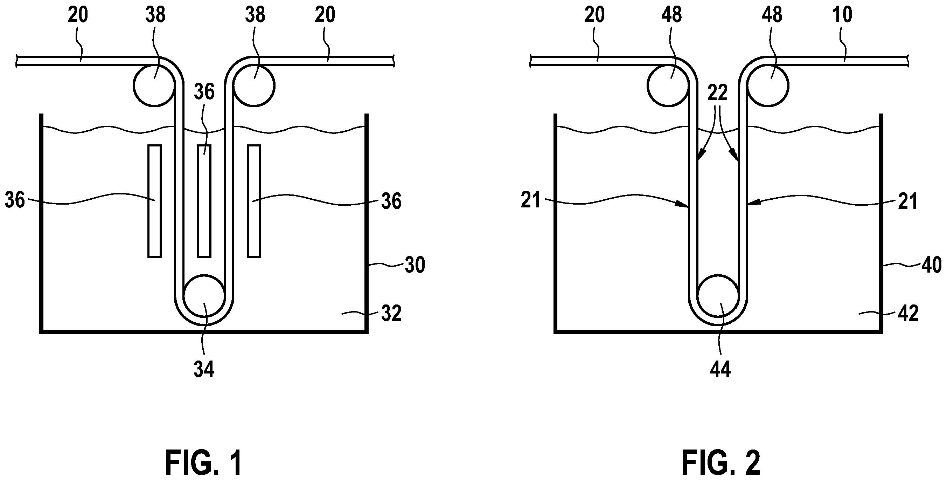

Figur 1 zeigt eine schematische Darstellung einer Prälithiierung eines Elektrodenbandes 20. Das Elektrodenband 20 umfasst ein elektrochemisches Aktivmaterial, vorliegend Silizium, und eine elektronische Leitkomponente wie beispielsweise Leitruß. Zur mechanischen Stabilisierung umfasst das Elektrodenband 20 auch einen Polymerbinder. Das Elektrodenband 20 ist beispielsweise durch Walzen oder Extrudieren hergestellt.

Das Elektrodenband 20 wird kontinuierlich einem Prälithiierungstank 30 zugeführt, welcher mit einer Lithiierungsflüssigkeit 32 gefüllt ist. Bei der Lithiierungsflüssigkeit 32 handelt es sich um einen flüssigen Elektrolyt, in welchem ein Lithiumsalz gelöst ist. Dabei wird das Elektrodenband 20 mäandrierend über zwei Führungsrollen 38 und eine Leitrolle 34 geführt. Die Führungsrollen 38 sind außerhalb des Prälithiierungstanks 30 angeordnet und die Leitrolle 34 ist innerhalb des Prälithiierungstanks 30 und damit auch innerhalb der Lithiierungsflüssigkeit 32 angeordnet.

Innerhalb des Prälithiierungstanks 30 und innerhalb der Lithiierungsflüssigkeit 32 sind mehrere Badelektroden 36 angeordnet. Das Elektrodenband 20 wird zwischen den Badelektroden 36 hindurch durch die Lithiierungsflüssigkeit 32 geführt. Die Leitrolle 34 ist elektrisch leitfähig ausgebildet und mit einem positiven Pol einer hier nicht dargestellten Spannungsquelle verbunden. Die Badelektroden 36 sind mit einem negativen Pol der Spannungsquelle verbunden. Somit liegt zwischen dem Elektrodenband 20 und den Badelektroden 36 ein elektrisches Feld an. Durch das anliegende elektrische Feld zerfällt das gelöste Lithiumsalz und Lithium wird zusammen mit Elektrolyt in das Elektrodenband 20 eingebracht.

Das Elektrodenband 20 wird kontinuierlich weiter einem Spülbad 40 zur Spülung des Elektrodenbandes 20 zugeführt. Figur 2 zeigt eine schematische Darstellung einer Spülung des Elektrodenbandes 20 aus Figur 1. Das Elektrodenband 20 weist nach der Prälithiierung neben dem eingelagerten Lithium auch Elektrolyt auf, welcher durch das Spülen in dem Spülbad 40 aus dem Elektrodenband 20 entfernt werden soll. Das Elektrodenband 20 ist dabei porös und insbesondere noch frei von einem metallischen Stromableiter 12.

Das Spülbad 40 ist mit einer Spülflüssigkeit 42 gefüllt. Das Elektrodenband 20 wird mäandrierend über zwei Führungswalzen 48 und ein hohlzylindrisch ausgebildetes perforiertes Element 44 geführt. Die Führungswalzen 48 sind außerhalb des Spülbads 40 angeordnet und das perforierte Element 44 ist innerhalb des Spülbads 40 und damit auch innerhalb der Lithiierungsflüssigkeit 32 angeordnet. Das perforierte Element 44 ist somit in Form einer Rolle oder einer Walze ausgebildet.

Das Elektrodenband 20 ist teilweise um eine Mantelfläche des hohlzylindrischen perforierten Elements 44 gewunden. Eine erste Oberfläche 21 des Elektrodenbands 20 ist dabei dem hohlzylindrischen perforierten Element 44 abgewandt. Eine zweite Oberfläche 22 des Elektrodenbands 20, welche der ersten Oberfläche 21 des Elektrodenbands 20 gegenüber liegt, ist dem hohlzylindrischen perforierten Element 44 zugewandt. Die zweite Oberfläche 22 des Elektrodenbandes 20 liegt somit an dem hohlzylindrischen perforierten Element 44 an. Die zweite Oberfläche 22 des Elektrodenbandes 20 umgibt die Mantelfläche des hohlzylindrischen perforierten Elements 44 teilweise, vorliegend in einem Bereich von etwa 180°.

In dem Spülbad 40 wird das Elektrodenband 20 mit der Spülflüssigkeit 42 gespült, wobei der Elektrolyt ausgewaschen wird. Aus dem Elektrodenband 20 entsteht nach Abgabe des vorhandenen Elektrolyten ein Elektrodenfilm 10. Der so hergestellte Elektrodenfilm 10, welcher nach dem Spülen zumindest weitgehend frei von Elektrolyt ist, wird dann kontinuierlich dem Spülbad 40 entnommen.

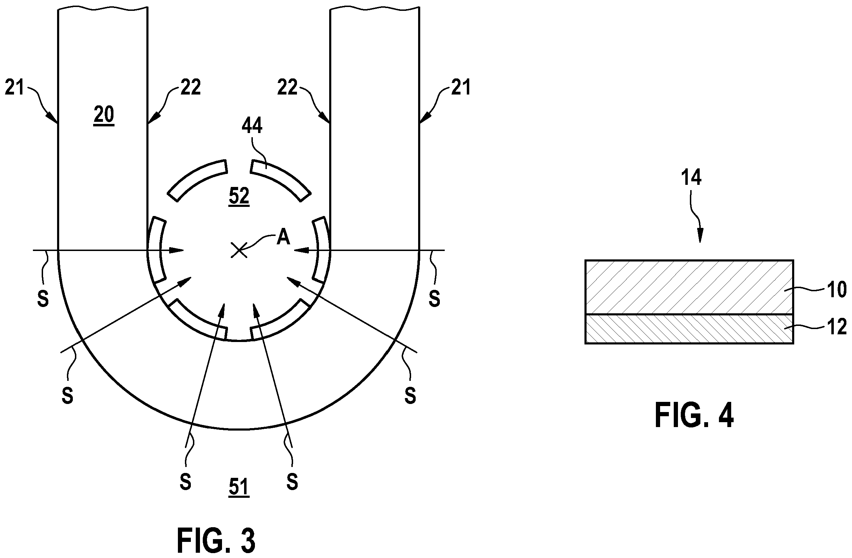

In Figur 3 ist ein Bereich aus Figur 2 vergrößert dargestellt. Der hier dargestellte Bereich umfasst das perforierte Element 44 und einen Teil des Elektrodenbandes 20. Wie bereits ausgeführt, ist das Elektrodenband 20 dabei teilweise um die Mantelfläche des hohlzylindrischen perforierten Elements 44 gewunden. Dabei liegt die zweite Oberfläche 22 des Elektrodenbandes 20 an dem hohlzylindrischen perforierten Element 44 an und die erste Oberfläche 21 des Elektrodenbandes 20 ist dem hohlzylindrischen perforierten Element 44 abgewandt. Die erste Oberfläche 21 des Elektrodenbandes 20 ist somit in Kontakt mit der Spülflüssigkeit 42.

Das hohlzylindrische perforierte Element 44 weist durchgehende Öffnungen oder Durchbrüche auf, welche eine Durchströmung mit der Spülflüssigkeit 42 erlauben. Das hohlzylindrische perforierte Element 44 ist zumindest annähernd rotationssymmetrisch zu einer Mittelachse A ausgebildet. Das hohlzylindrische perforierte Element 44 rotiert um die Mittelachse A, wobei die Umfangsgeschwindigkeit des hohlzylindrischen perforierten Elements 44 an seiner Mantelfläche einer Vorschubgeschwindigkeit des Elektrodenbandes 20 entspricht.

Innerhalb des hohlzylindrischen perforierten Elements 44 wird ein Unterdruck erzeugt. Dadurch wird in dem Spülbad 40 eine Druckdifferenz derart erzeugt, dass ein erster Druck 51, welcher an der ersten Oberfläche 21 des Elektrodenbandes 20 herrscht, größer ist als ein zweiter Druck 52, welcher an einem Teil der zweiten Oberfläche 22 des Elektrodenbandes 20 herrscht, nämlich an dem Teil, welcher an der Mantelfläche des hohlzylindrischen perforierten Elements 44 anliegt.

Damit ist der außerhalb des hohlzylindrischen perforierten Elements 44 herrschende erste Druck 51 größer als der innerhalb des hohlzylindrischen perforierten Elements 44 herrschende zweite Druck 52. Dadurch wird die in dem Spülbad 40 befindliche Spülflüssigkeit 42 durch das Elektrodenband 20 und weiter durch die Mantelfläche des hohlzylindrischen perforierten Elements 44 hindurch in das perforierte Element 44 hinein gesaugt.

Die Spülflüssigkeit 42 strömt also aufgrund der in dem Spülbad 40 erzeugten Druckdifferenz in eine Strömungsrichtung S durch das Elektrodenband 20 hindurch. Die Strömungsrichtung S verläuft dabei radial von außen in das hohlzylindrische perforierte Element 44 hinein. Dabei wäscht die Spülflüssigkeit 42 den in dem Elektrodenband 20 vorhandenen Elektrolyt aus. Somit tritt der Elektrolyt aus dem Elektrodenband 20 aus und strömt durch die Mantelfläche des hohlzylindrischen perforierten Elements 44 hindurch in das hohlzylindrische perforierte Element 44 hinein.

Bei der Erzeugung des Unterdrucks wird die Spülflüssigkeit 42 innerhalb des hohlzylindrischen perforierten Elements 44 mittels einer hier nicht dargestellten Pumpe abgesaugt. Die Pumpe ist dabei Teil eines Kreislaufs, über welchen die abgesaugte Spülflüssigkeit 42 dem Spülbad 40 außerhalb des hohlzylindrischen perforierten Elements 44 wieder zugeführt wird. Der Kreislauf weist auch einen Filter auf, in welchem der ausgewaschene Elektrolyt von der Spülflüssigkeit 42 getrennt wird.

Figur 4 zeigt eine schematische Schnittdarstellung einer Elektrode 14. Bei der Elektrode 14 handelt es sich vorliegend um eine Anode für eine Lithium-Ionen-Batteriezelle. Die Elektrode 14 umfasst einen Elektrodenfilm 10, welcher nach dem hier beschriebenen Verfahren hergestellt ist, und einen Stromableiter 12. Der Stromableiter 12 ist vorliegend aus Kupfer gefertigt.

Der Stromableiter 12 wird dabei erst nach Entnahme des Elektrodenfilms 10 aus dem Spülbad 40 auf den Elektrodenfilm 10 aufgebracht. Die Verbindung des Elektrodenfilms 10 mit dem Stromableiter 12 erfolgt dabei vorliegend mittels Laminierung.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Elektrodenfilms (10), wobei
ein zugfestes Elektrodenband (20) bereitgestellt wird,
welches ein elektrochemisches Aktivmaterial enthält, wobei
das Elektrodenband (20) elektrochemisch prälithiiert wird, und wobei das prälithiierte Elektrodenband (20) in einem Spülbad (40) gespült wird, **dadurch gekennzeichnet, dass**
das prälithiierte Elektrodenband (20) derart in das Spülbad (40) eingebracht wird, dass
mindestens eine erste Oberfläche (21) des Elektrodenbandes (20) in Kontakt mit einer in dem Spülbad (40) befindlichen Spülflüssigkeit (42) gelangt, und dass
in dem Spülbad (40) eine Druckdifferenz derart erzeugt wird, dass ein erster Druck (51), welcher an der ersten Oberfläche (21) des Elektrodenbandes (20) herrscht, größer ist als
ein zweiter Druck (52), welcher an mindestens einem Teil einer der ersten Oberfläche (21) gegenüber liegenden zweiten Oberfläche (22) des Elektrodenbandes (20) herrscht.

2. Verfahren nach Anspruch 1, **dadurch gekennzeichnet, dass** das prälithiierte Elektrodenband (20) beim Einbringen in das Spülbad (40) porös ist.

3. Verfahren nach einem der vorstehenden Ansprüche, **dadurch gekennzeichnet, dass**
das prälithiierte Elektrodenband (20) beim Einbringen in das Spülbad (40) frei von einem metallischen Stromableiter (12) ist.

4. Verfahren nach einem der vorstehenden Ansprüche, **dadurch gekennzeichnet, dass**
das Spülbad (40) ein perforiertes Element (44) aufweist, und dass das prälithiierte Elektrodenband (20) derart in das Spülbad (40) eingebracht wird, dass
die zweite Oberfläche (22) des Elektrodenbandes (20) an dem perforierten Element (44) anliegt.

5. Verfahren nach Anspruch 4, **dadurch gekennzeichnet, dass**
das perforierte Element (44) hohlzylindrisch ausgebildet ist.

6. Verfahren nach Anspruch 5, **dadurch gekennzeichnet, dass**
das prälithiierte Elektrodenband (20) derart in das Spülbad (40) eingebracht wird, dass
die zweite Oberfläche (22) des Elektrodenbandes (20) eine Mantelfläche des perforierten Elements (44) teilweise umgibt.

7. Verfahren nach einem der Ansprüche 5 bis 6, **dadurch gekennzeichnet, dass**
das perforierte Element (44) in dem Spülbad (40) um eine Mittelachse (A) rotiert.

8. Verfahren nach einem der Ansprüche 5 bis 7, **dadurch gekennzeichnet, dass**
die Druckdifferenz in dem Spülbad (40) erzeugt wird, indem innerhalb des perforierten Elements (44) ein Unterdruck erzeugt wird.

9. Verfahren nach Anspruch 8, **dadurch gekennzeichnet, dass** Spülflüssigkeit (42) innerhalb des perforierten Elements (44) abgesaugt wird und dem Spülbad (40) außerhalb des perforierten Elements (44) wieder zugeführt wird.

## Claims

1. Method for producing an electrode film (10), wherein an electrode strip (20) of high tensile strength is provided, which electrode strip contains an electrochemical active material, wherein the electrode strip (20) is electrochemically prelithiated, and wherein the prelithiated electrode strip (20) is rinsed in a rinse bath (40), **characterized in that**
the prelithiated electrode strip (20) is introduced into the rinse bath (40) in such a way that
at least one first surface (21) of the electrode strip (20) comes into contact with a rinse liquid (42) situated in the rinse bath (40), and **in that**
a pressure difference is generated in the rinse bath (40) in such a way that a first pressure (51) prevailing at the first surface (21) of the electrode strip (20) is greater than a second pressure (52) prevailing at at least one portion of a second surface (22) of the electrode strip (20), said second surface being situated opposite the first surface (21).

2. Method according to Claim 1, **characterized in that**
the prelithiated electrode strip (20) is porous when it is introduced into the rinse bath (40).

3. Method according to either of the preceding claims, **characterized in that**
the prelithiated electrode strip (20) is free of a metallic current collector (12) when it is introduced into the rinse bath (40).

4. Method according to any of the preceding claims, **characterized in that**
the rinse bath (40) has a perforated element (44), and **in that** the prelithiated electrode strip (20) is introduced into the rinse bath (40) in such a way that
the second surface (22) of the electrode strip (20) bears against the perforated element (44).

5. Method according to Claim 4, **characterized in that**
the perforated element (44) is embodied in a hollow-cylindrical fashion.

6. Method according to Claim 5, **characterized in that**
the prelithiated electrode strip (20) is introduced into the rinse bath (40) in such a way that
the second surface (22) of the electrode strip (20) partly surrounds a lateral surface of the perforated element (44).

7. Method according to either of Claims 5 and 6, **characterized in that**
the perforated element (44) rotates about a centre axis (A) in the rinse bath (40).

8. Method according to any of Claims 5 to 7, **characterized in that**
the pressure difference is generated in the rinse bath (40) by a reduced pressure being generated within the perforated element (44).

9. Method according to Claim 8, **characterized in that**
rinse liquid (42) within the perforated element (44) is extracted by suction and is returned to the rinse bath (40) outside the perforated element (44).

## Revendications

1. Procédé de fabrication d'un film d'électrode (10), une bande d'électrode (20) résistant à la traction étant prévue, qui contient un matériau actif du point de vue électrochimique, la bande d'électrode (20) étant prélithiée par voie électrochimique, et la bande d'électrode prélithiée (20) étant lavée dans un bain de lavage (40),
**caractérisé en ce que**
la bande d'électrode prélithiée (20) est introduite dans le bain de lavage (40) de telle sorte que au moins une première surface (21) de la bande d'électrode (20) vienne en contact avec un liquide de lavage (42) situé dans le bain de lavage (40), et **en ce que**
une différence de pression est générée dans le bain de lavage (40) de telle sorte qu'une première pression (51), qui règne sur la première surface (21) de la bande d'électrode (20), soit supérieure à une deuxième pression (52) qui règne sur au moins une partie d'une deuxième surface (22) de la bande d'électrode (20) qui est opposée à la première surface (21).

2. Procédé selon la revendication 1, **caractérisé en ce que**
la bande d'électrode (20) prélithiée est poreuse lors de son introduction dans le bain de lavage (40).

3. Procédé selon l'une des revendications précédentes, **caractérisé en ce que**
la bande d'électrode (20) prélithiée est dépourvue de déflecteur de courant métallique (12) lors de son introduction dans le bain de lavage (40).

4. Procédé selon l'une des revendications précédentes, **caractérisé en ce que**
le bain de lavage (40) comporte un élément perforé (44) et **en ce que** la bande d'électrode (20) prélithiée est introduite dans le bain de lavage (40) de telle manière que la deuxième surface (22) de la bande d'électrode (20) vienne en appui sur l'élément perforé (44).

5. Procédé selon la revendication 4, **caractérisé en ce que**
l'élément perforé (44) est réalisé sous la forme d'un cylindre creux.

6. Procédé selon la revendication 5, **caractérisé en ce que**
la bande d'électrode (20) prélithiée est introduite dans le bain de lavage (40) de manière à ce que la deuxième surface (22) de la bande d'électrode (20) entoure partiellement une surface latérale de l'élément perforé (44).

7. Procédé selon l'une des revendications 5 et 6, **caractérisé en ce que**
l'élément perforé (44) tourne sur un axe central (A) dans le bain de lavage (40).

8. Procédé selon l'une des revendications 5 à 7, **caractérisé en ce que**
la différence de pression est générée dans le bain de lavage (40) par génération d'une dépression à l'intérieur de l'élément perforé (44).

9. Procédé selon la revendication 8, **caractérisé en ce que**
le liquide de lavage (42) est aspiré à l'intérieur de l'élément perforé (44) et amené au bain de lavage (40) à l'extérieur de l'élément perforé (44).
